# EUROPEAN PATENT SPECIFICATION

(11) **EP 4 283 273 B1**
(45) Date of publication and mention of the grant of the patent: **20.11.2024**
(21) Application number: 23174744.5
(22) Date of filing: 23.05.2023
(51) Int. Cl.: G01M 1/32, G01M 17/02, G01M 1/22

(54) **HIGH SPEED VIBRATION OPTIMIZATION OF A TYRE WHEEL ASSEMBLY**
SCHWINGUNGSOPTIMIERUNG BEI HOHER GESCHWINDIGKEIT EINER REIFENRADANORDNUNG
OPTIMISATION DE VIBRATIONS À GRANDE VITESSE D'UN ENSEMBLE ROUE DE PNEU

(30) Priority: 23.05.2022 BE 202205399
(43) Date of publication of application: 29.11.2023
(73) Proprietor: Euro-Fitting Management NV, 1930 Zaventem (BE)
(72) Inventor: De Bruyne, Luc, 1930 Zaventem (BE)
(74) Representative: Brantsandpatents bv

(56) References cited:
- JP-A- 2012 052 858
- US-A- 5 237 505
- US-A1- 2002 124 650

## Description

### Fl ELD OF THE I NVENTI ON

The present invention relates to a method for balancing tire and wheel assemblies. In particular, the present invention relates to a method for balancing tire and wheel assemblies at high speed.

In a second aspect, the present invention also relates to a system for high-speed harmonic forces testing and balancing tire and wheel assemblies.

The present invention pertains to the technical field of quality assurance devices and methods. In particular, the present invention pertains to the technical field of vibration reduction for tire and tire/wheel assemblies at critical speeds of a car.

### BACKGROUND

Such a method according to the preamble is also known from JP2010194288. JP '288 aims to reduce the problem of high speed vibrations of a tire wheel assembly at high speeds. JP '288 describes a method wherein a first mass is mounted onto a tire/wheel assembly at a specific phase, after which said tire/wheel assembly is spun at high speeds and tested for uniformity. Based on a tire uniformity vector calculated during uniformity testing, a second mass and a second phase are computed. The method of JP '288 is iterative, requiring multiple tries in order to attain balancing of a tire/wheel assembly.

A similar iterative process for balancing a wheel is disclosed in US 20050011262. US '262 is limited in that both static and dynamic balancing are tested only at low speeds. This practice disadvantageously obscures other relevant wheel unbalance factors. This results in wheels which are balanced inadequately for use in field conditions, causing a higher risk of poor riding experience or even malfunction of the wheels or vehicles onto which said wheels are assembled. The running balancing and tire uniformity process are carried out separately with no correlation between both processes. Furthermore, and missing link to the driving performance of the car.

US20020124650A1 discloses an apparatus for measuring uniformity and dynamic balance of a tire, comprising: a spindle rotatably supported in a rigidly-supported spindle housing, said tire being fixedly mounted on said spindle, said spindle being rotated when measurement is performed; and at least one piezoelectric force sensor mounted on a surface of said spindle housing, said at least one piezoelectric force sensor detecting a force generated by rotation of the tire as said spindle is rotated.

JP2012052858A discloses a high-speed uniformity adjustment system for a tire wheel assembly includes: a high-speed uniformity machine for measuring the high-speed uniformity of the tire wheel assembly; and a calculation device for calculating the mass and installment topology of a balance weight such that the magnitude of a vector expressed as a sum of a vector of the measured high-speed uniformity and the vector of the centrifugal force applied to the balance weight attached against the tire wheel assembly is smaller than the magnitude of the vector of the measured high-speed uniformity.

US5237505A discloses a method wherein the mass of a tire/wheel assembly is altered to apply a static imbalance to the assembly in a manner which aims to reduce the overall tendency of the assembly to cause vibration in the plane perpendicular to its axis of rotation when in use.

The known methods are not particularly suited to address performance affecting factors associated with more complex systems including, for example though not limited to, reciprocating motions.

Tire/wheel assembly performance depends on the value and position of the balancing and tire uniformity force influence on the tire/wheel assembly during driving. Due to the introduction of bigger sizes of tires, the standard balancing method has no impact evaluation of the tire deflection due to the increase of car load. This effect is further aggravated by the increased battery weight and extra motors on hybrid/electrical cars.

The present invention aims to resolve at least some of the problems and disadvantages mentioned above. The invention thereto aims to provide a method and system which permit efficient and effective balancing of tire/wheel assemblies such that the resulting balanced tire/wheel assemblies are safe and provide enough comfort in real field conditions.

### SUMMARY OF THE INVENTION

The present invention and embodiments thereof serve to provide a solution to one or more of above-mentioned disadvantages. To this end, the present invention relates to a method for high-speed tire/wheel assembly uniformity balancing according to claim 1. The method as disclosed in claim 1 advantageously results in faster processing times as well as increased driving comfort at the critical speed of the car when the risk level of vibrations is higher.

Preferred embodiments of the device are shown in any of the claims 2 to 9.

In a second aspect, the present invention relates to a system for tire/wheel assembly uniformity balancing according to claim 10 with which to apply the method according to claim 1.

### DESCRIPTION OF FlGURES

The following description of the figures of specific embodiments of the invention is merely exemplary in nature and is not intended to limit the present teachings, their application or uses. Throughout the drawings, corresponding reference numerals indicate like or corresponding parts and features.
**Figure 1** presents an assembly line including all preparatory steps before application of the method for high-speed tire/wheel assembly uniformity balancing and final steps of auditing of tire/wheel balancing and sending tire/wheel assembly to warehouse.
**Figure 2** presents a detailed scheme of the steps comprising the method of high-speed tire/wheel assembly uniformity balancing.
**Figure 3** presents a schematic view of a tire/wheel assembly as mounted onto the system for tire/wheel assembly uniformity balancing.
**Figure 4** presents a schematic view of a balanced tire/wheel assembly as mounted onto the system for tire/wheel assembly uniformity.

### DETAILED DESCRIPTION OF THE INVENTION

The present invention concerns a method and system for high-speed tire and wheel assembly uniformity balancing. The present inventions advantageously allows for balancing a tire/wheel assembly for multiple unbalancing factors in a single station, this advantageously permits not only a higher throughput but also lower rate of rejections during any further inspection or auditing steps.

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

As used herein, the following terms have the following meanings:
"A", "an", and "the" as used herein refers to both singular and plural referents unless the context clearly dictates otherwise. By way of example, "a compartment" refers to one or more than one compartment.

"Comprise", "comprising", and "comprises" and "comprised of" as used herein are synonymous with "include", "including", "includes" or "contain", "containing", "contains" and are inclusive or open-ended terms that specifies the presence of what follows e.g. component and do not exclude or preclude the presence of additional, non-recited components, features, element, members, steps, known in the art or disclosed therein.

Furthermore, the terms first, second, third and the like in the description and in the claims, are used for distinguishing between similar elements and not necessarily for describing a sequential or chronological order, unless specified. It is to be understood that the terms so used are interchangeable under appropriate circumstances and that the embodiments of the invention described herein are capable of operation in other sequences than described or illustrated herein.

The recitation of numerical ranges by endpoints includes all numbers and fractions subsumed within that range, as well as the recited endpoints.

Whereas the terms "one or more" or "at least one", such as one or more or at least one member(s) of a group of members, is clear *per se,* by means of further exemplification, the term encompasses *inter alia* a reference to any one of said members, or to any two or more of said members, such as, *e.g*., any ≥3, ≥4, ≥5, ≥6 or ≥ 7 etc. of said members, and up to all said members.

Unless otherwise defined, all terms used in disclosing the invention, including technical and scientific terms, have the meaning as commonly understood by one of ordinary skill in the art to which this invention belongs. By means of further guidance, definitions for the terms used in the description are included to better appreciate the teaching of the present invention. The terms or definitions used herein are provided solely to aid in the understanding of the invention.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to a person skilled in the art from this disclosure, in one or more embodiments. Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

In a first aspect, the invention provides a method for high-speed tire/wheel assembly uniformity balancing comprising the steps of:
receiving a pressurized tire/wheel assembly;
mounting the tire/wheel assembly onto a rotatable fixture of a tire uniformity testing machine, said fixture being configured to receive and rigidly attach to a tire/wheel assembly;
bringing a testing drum in contact with the tire of the tire/wheel assembly such that a predetermined force and/or deformation is applied upon said tire;
running the tire uniformity testing machine, bringing the perimeter of the testing drum to a critical speed while measuring vibration forces by means of at least 4 3D sensors, said critical speed being preferably be between 80 km/h and 150 km/h, more preferably between 90 km/h and 140 km/h, still more preferably between 110 km/h and 130 km/h, most preferably 120 km/h;
computing mass and location of at least one balancing weight; and
balancing the tire/wheel assembly by applying said at least one balancing weight.

In this method, the measured vibration forces are used to compute a vibration force vector, which vector is a vectorial sum of a static vibration force and a torque imbalance force vector. The static vibration force is the vectorial sum of a tire uniformity first harmonic radial force variation vector and a static imbalance vector. The first harmonic radial force variation vector and a static imbalance vector are measured on each of at least two planes of the tire/wheel assembly, said planes being perpendicular to the axis of the tire/wheel assembly. The torque imbalance vector corresponding to the dynamic imbalance of the tire/wheel assembly, the first harmonic radial force variation vector and a static imbalance vector measured on each plane being used to calculate a torque imbalance force vector. By preference each plane is equipped with at least two 3D sensors. Most preferably, said sensors are mounted on a trunnion supporting axis of the rotatable fixture. Known methods consider only the mass distribution of the tire/wheel assembly when balancing for dynamic imbalance. The present method advantageously incorporates the effects of mass distribution of the tire/wheel assembly as well as tire uniformity harmonics in the dynamic imbalance vector, here designated torque imbalance vector. In this way, non-uniformities in tire elasticity around the perimeter of the tire are also advantageously compensated for. In order to compensate for both the static vibration force and a torque imbalance force vector, the method includes a step of calculating and providing a mass and location for the balancing weights to be placed on the surface of the rim of the tire/wheel assembly. More preferably, the calculated location of the balancing weights is on the interior perimeter surface of the rim, facing the axis of the tire/wheel assembly. This surface advantageously permits a continuous range of placement options instead of only two planes. The possibility of using said interior perimeter surface of the rim permits also the use of a single balancing weight, which weight is protected against displacement due to impacts while driving. Most preferably, the step of calculating and providing a mass and location for the balancing weights includes only one mass and one location for a single weight to be placed on the interior perimeter surface of the rim. Said single weight is most preferably cut to weight from a continuous balancing weight stock. Most preferably, said balancing weights are also cut to shape, In this way allowing for the most advantageous mass placement and distribution when applied to the tire/wheel assembly, therefore, permitting superior balancing of said assembly when compared to known methods.

By preference, two of the at least two measurement planes are distanced at least 10mm from each other, more preferably 15mm, 20mm, 25mm. More preferably, at least one of the at least two measurement planes is located coincident with a first outer edge of the wheel, more preferably still, a second plane is located coincident a second outer edge of the wheel, said second outer edge being located opposite to said first outer edge. In this way, the combined first harmonic radial force variation vector and a static imbalance vector measured on each plane can be used to more accurately calculate a torque imbalance force vector, which torque imbalance force vector relates to the dynamic imbalance of the tire/wheel assembly. By preference, the 3D sensors used are high definition 3D piezo electric sensors, more preferably, said sensors can detect variations of less than 0.1 N, preferably less than 0.01 N, most preferably less than 0.001 N.

In a further embodiment, the vibration force vector is a vectorial sum of the tire uniformity first harmonic radial force variation vector and the static imbalance vector and a torque imbalance force vector. By preference, the application of the balancing weight is carried out as an automated process. In this way, a more precise and faster placement of the weights is attained. The higher speed at which the tire/wheel assembly is tested advantageously permits detecting and balancing for a broader range of unbalance factors that would otherwise be obscured by radial force variation if testing at low-speed. For example, tangential and lateral force variations due to uniformity and mass unbalance, as well as radial run-out are advantageously more strongly represented in the measured vibration forces. In a further preferred embodiment, the measured vibration force vector is a vectorial sum of the tire uniformity first harmonic radial force variation vector and the static imbalance vector for each of at least two planes of the tire/wheel assembly and a torque imbalance force vector. The more complex composition of the vibration force vector advantageously increases the number of factors which are addressed during the step of balancing a tire/wheel assembly, therefore reducing the number of quality nonconformities.

In a further embodiment, before the step of bringing the testing drum in contact with the tire of the tire/wheel, at least one load value is calculated based a mass distribution of a car. By preference, a range of load values is calculated. More preferably, this range of load values reflect different mass distributions related to number and location of passengers and luggage loads inside a vehicle. More preferably, the range of load values should consider a range of roll and pitch angles from -45° to 45°. In a further embodiment, during the vibration force vector measurement step, the force applied to the tire by the testing drum is equal to at least one of the calculated load values. In this way, the balancing of each tire/wheel assembly can be tailored to the preferred type of driving circumstances and experience required by a customer.

In a further embodiment, the step of computing mass and location of at least one balancing weight includes computation of the location and magnitude of the vibration force vector. By preference, computation of the location and magnitude of the vibration force vector is carried out using vibration values measured by at least two sensors, more preferably three, most preferably at least four 3D sensors. In this way, vibration is advantageously detected and measured across multiple axis, allowing for a more precise computation of the direction and magnitude of the vibration force vector.

In most common cases, balancing weights are provided in a range of standard masses. Therefore, it is unlikely that a standard balancing weight having a mass exactly the same as the computed mass for the balancing weight is readily available. In a further embodiment, the computed mass of the balancing weight is approximated to the mass of a nearest available standard weight. By preference, the computed mass of the balancing weight is approximated to the mass of a combination standard balancing weights. More preferably, said combination of standard weights includes divisible adhesive tape weights, yet more preferably, said divisible adhesive tape weights have a tolerance of 2.5 g, 1.5g, 1g most preferably, 0.5g. In this way, the computed mass for the balancing weight can be used for further computations.

In a further embodiment, the position of the at least one balancing weight is given as an angle and distance from the wheel axis. This position refers to the center of mass of the at least one balancing weight. In this way, the position of the at least one balancing weight is made clear, enabling easy assembly by either an operator or by automated weight application means, such as but not limited to a robotic arm equipped with an end effector configured to apply balancing weights. In some situations, such as but, not limited to, tire/wheel assemblies with a torque imbalance force, at least one balancing weight in each of at least two planes may be necessary to adequately balance said tire/wheel assembly. Therefore, the position of the at least one balancing weight includes also a plane where said weight is to be placed. In this way, the vibration forces are addressed more effectively.

According to the method of the invention, the position of each balancing weight is computed based on the mass of the at least one balancing weight, and the magnitude and location of the vibration force vector. This permits balancing the tire/wheel assembly even if multiple standard balancing weights are used. By preference, the position of each balancing weight is computed considering also the dimensions of each of the at least one balancing weights. In this way, overlapping of the balancing wights is avoided and thereby ensuring that each balancing weight can be properly assembled.

In order to filter out tire/wheel assemblies which, after the step of placing balancing weights, fail to meet the desired performance standards, a step of auditing the balanced tire/wheel assembly for any residual imbalance is necessary. For this purpose, an imbalance limit is calculated, which limit is used to determine if the audited tire/wheel assemblies meet the desired quality. Therefore, in a further embodiment, the method further comprises a step of auditing the balanced tire/wheel for any residual imbalance while the tire/wheel assembly is still mounted onto the tire uniformity machine. This advantageously permits reducing setup times that would otherwise be necessary should the tire/wheel assembly have to be mounted onto another tire uniformity testing machine. Another significant advantage relates to the reduced factory space required when using only a single machine to carry all the measuring, balancing and testing of a tire/wheel assembly. As an alternative to this embodiment, the step of auditing the balanced tire/wheel for any residual imbalance is performed on a second tire uniformity machine. In this way, the throughput of the tire uniformity machine is increased as the delay caused by the step of balancing the tire/wheel assembly and the step of auditing is advantageously transferred to other workstations. This permits also the use of tire uniformity machines for the auditing step, which machines may have, for example, have a lower cost or different number and type of sensors.

A second aspect of the invention relates to a system for balancing a tire/wheel assembly comprising:
a drum assembly comprising a first axis and tire/wheel fixture assembly comprising a second axis parallel the first axis, said drum assembly being driven by a motor, said motor, the first axis being supported by a first frame, said first frame and the second axis being supported by a second frame, the first frame being slidably attached to the second frame and movable by means of at least one actuator;
at least four 3D sensors suitable for capturing force variations;
a brake comprising a disk rigidly attached to the first axis and brake caliper rigidly attached to the first frame, said caliper being mounted around the perimeter of the disk, and
a calculation unit configured to receive signals from each of the sensors, said calculation unit comprising at least one processing unit in connection with at least a memory unit, at least one user input device, at least one display device and at least one signal output element;

By preference, only the first axis is movable relative to the second axis. By preference, the first axis is moved by means of at least one threaded spindle and load drive set driving the first frame. More preferably, at least one sensor is provided connected between the distal end of the threaded spindle and the first frame. Said sensors being strain gauges, more preferably, the sensors being piezo-electric sensors. In this way, the signals captured by the at least one sensor connected to the spindle and the first frame can advantageously be used to accurately control and monitor the load pressure put upon a tire by the drum before and during system operation. The second axis preferably comprises two coaxially aligned parts movable relative to each other along their longitudinal axis, each of said parts comprising a flange, each flange being configured to support one side of a tire/wheel assembly. In this way, the tire/wheel assembly is supported from both sides, which advantageously eliminates false non-uniformity and/or unbalancing readings due to deformation of the second axis while under the load caused by the drum. More preferably, each part of the second axis is independently movable relative to each other. This permits using a conveyor to bring a tire/wheel assembly in alignment with the second axis, thus avoiding the need to lift said tire/wheel assembly while also making the ingress of said tire/wheel assembly into the machine substantially faster. Most preferably, each part of the second axis is movable by means of at least one electric actuator. In this way, a longer first motion of each part of the second axis can be carried out followed by a second shorter motion of each of said second axis parts. This advantageously permits a faster installation of a tire/wheel assembly while maintaining said assembly firmly supported.

In a further embodiment, at least one of the at least four 3D sensors is rigidly attached to the housing of the tire/wheel fixture, said tire/wheel fixture being a clamp adaptor configured to hold the tire/wheel assembly. In a further embodiment, at least one of the at least four 3D sensors are rigidly attached to the second axis. The sensors used are, by preference but not limited to, accelerometers (piezoelectric), velocity sensors, proximity probes (capacitance or eddy current) and/or laser displacement sensors. More preferably, at least two of the sensors mounted on either the frame and/or the second axis are of the same type. In this way, computation errors due to different sensors being affected differently by changing environmental conditions are advantageously avoided.

According to the system of the invention, at least one of the processing units of the calculation unit are configured to run the steps of:
bringing a testing drum in contact with the tire of the tire/wheel assembly such that a predetermined force is applied upon said tire;
running the tire uniformity testing machine, bringing the perimeter of the testing drum to critical speed while measuring vibration forces by means of at least two sensors;
computing mass and location of at least one balancing weight.

By having a processing unit run the aforementioned steps, the testing parameters are advantageously kept consistent from test to test. By preference, all the parameters (e.g. tire/wheel assembly speed, load pressure, tire pressure) are controllable by an operator by means of the at least one user input device. More preferably, all parameters and measured values are associated to an individual test reference code, which parameters, values and code and are stored in at least one of the memory units. Also by preference, said stored information includes the mass and location of at least one balancing weight. In this way, test parameters, measured values and the computed mass and location of the one or more balancing weights associated to an individual test are advantageously made available for use in other processes (e.g. balancing the wheel/tire assembly) and for quality control. However, it is obvious that the invention is not limited to this application. The method according to the invention can be applied in all sorts of wheels which must be balanced by the addition of mass.

The invention is further described by the following non-limiting examples which further illustrate the invention, and are not intended to, nor should they be interpreted to, limit the scope of the invention.

The present invention will be now described in more details, referring to examples that are not limitative.

### DESCRIPTION OF FlGURES

With as a goal illustrating better the properties of the invention the following presents, as an example and limiting in no way other potential applications, a description of a number of preferred applications of the method for high-speed tire/wheel assembly uniformity balancing based on the invention, wherein:

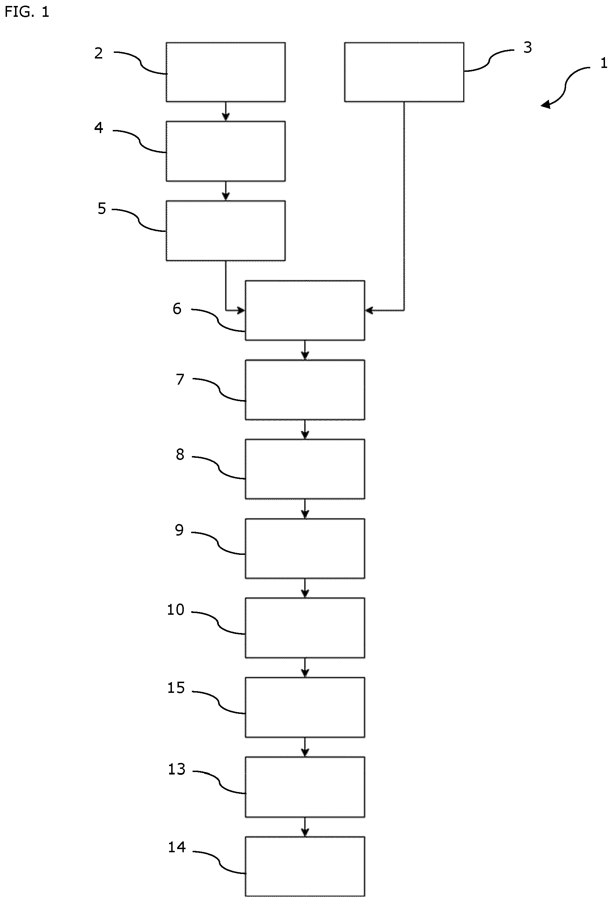

FIG. 1 presents an assembly line **1** including all preparatory steps before application of the method for high-speed tire/wheel assembly uniformity balancing **15** and final steps of auditing of tire/wheel balancing **13** and sending tire/wheel assembly to warehouse **14.** The line starts with the steps of feeding a tire **3** and feeding a wheel **2.** The first preparatory step for the wheel is the installation of a valve **4** followed measurement of the wheel run-out. The tire and wheel are then assembled together **6,** followed a step of point-to-point matching **7** where the heaviest point of the tire is radially aligned with the lightest point of the wheel. The tire of the tire/wheel assembly **23** is then inflated **8** to a predetermined pressure after which the tire pressure monitoring system is activated **9** and the bead seat is optimized **10.** The tire/wheel assembly **12** finally undergoes a high-speed uniformity balancing step **15** after which the balanced tire/wheel assembly **23** is audited **13** and, should it meet necessary quality requirements, is sent to warehouse **14.**

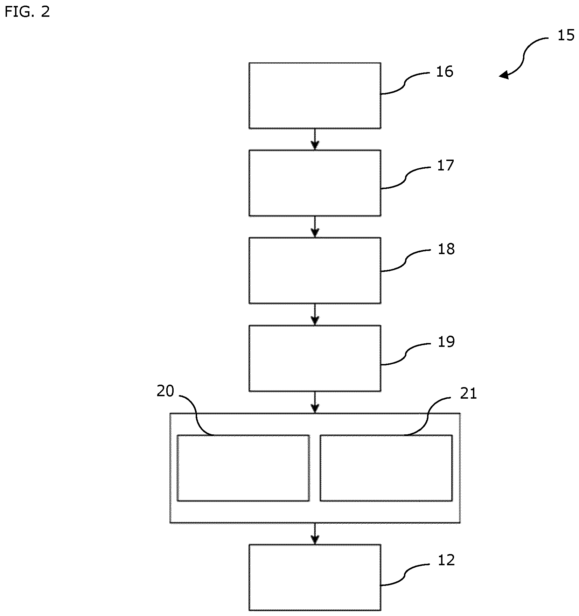

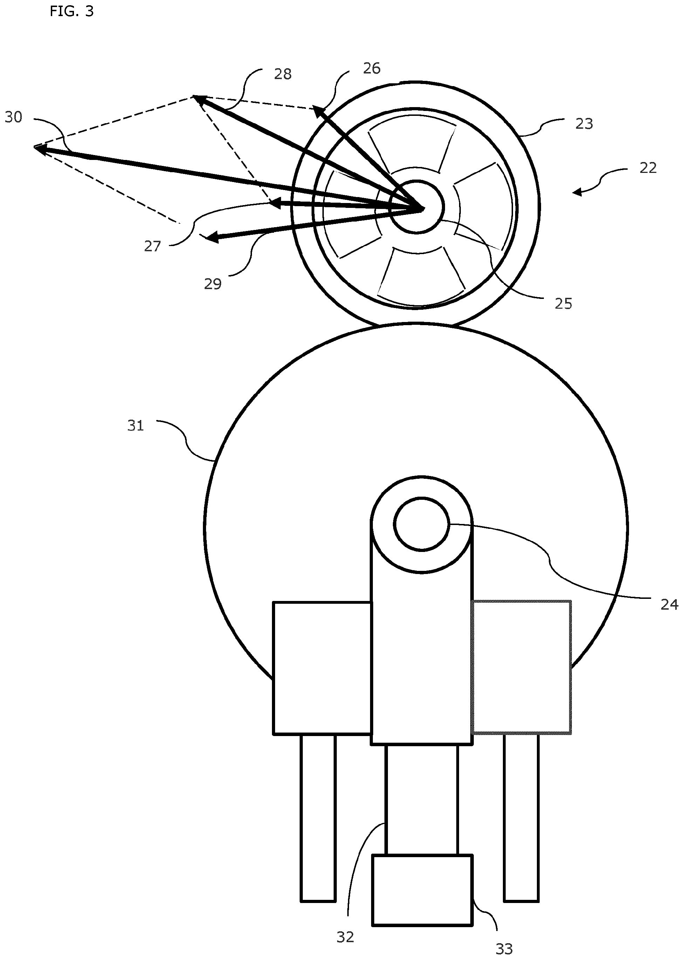

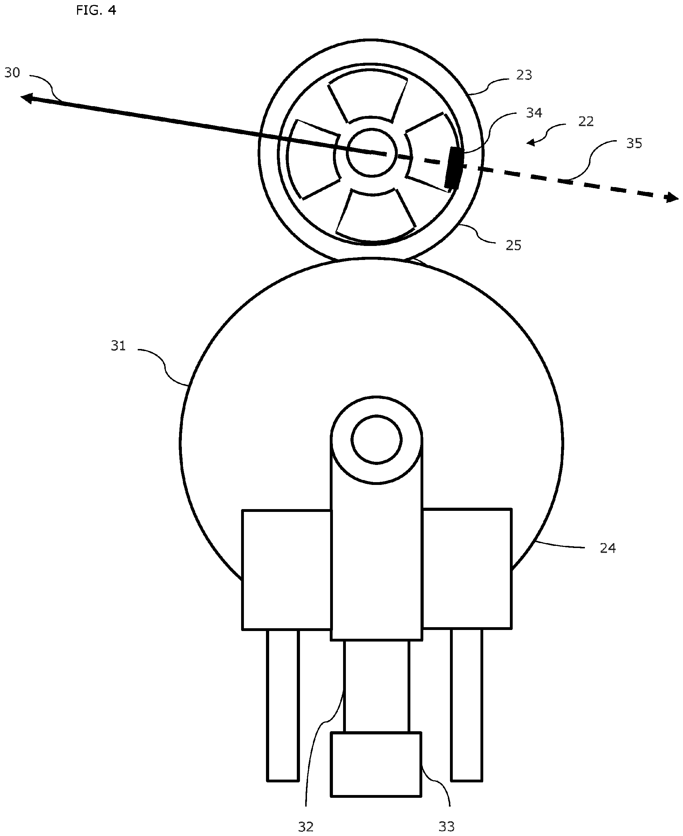

FIG. 2 presents a detailed scheme of the steps comprising the method of high-speed tire/wheel assembly uniformity balancing **15.** In a first step, the tire/wheel assembly **23** is received **16** in the system for tire/wheel assembly uniformity balancing **22.** Said the tire/wheel assembly **23** is then mounted on a fixture **17** and a drum **31** is brought into contact with tire/wheel assembly **18,** after which further pressure is applied upon the tire/wheel assembly until said pressure reaches a predetermined value **19.** The tire/wheel assembly **23** is then spun as the speed of the test drum is brought to 120 km/h **19.** At the same time, vibration forces are measured and used to compute the mass and location of at least one balancing weight **21.** Finally, said at least one balancing weights are placed onto the tire/wheel assembly in the computed locations **12.** This last balancing step **12** can be carried out in the same individual system **22** as shown in Fig. 4 or a subsequent and identical system **22** as in Fig. 3.
FIG. 3 presents a schematic view of a tire/wheel assembly **23** as mounted onto the system for tire/wheel assembly uniformity balancing **22.** The figure shows a tire/wheel assembly **23** mounted onto the second axis **25** of the system **22.** The figure shows drum **31** rotatably attached to the first axis **24,** which axis is movable relative to the second axis **25** by means of spindle/load drive motor transmission **32, 33.** The figure shows the forces accounted for during operation of the system **22.** The figure shows a first harmonic tire uniformity force **26** with static force **27** results in a static vibration force **28** as a result of the vector sum of forces **26** and **27.** These vectors **26, 27** and **28** relate to the upper plane of the tire. Said static vibration force **28** is then combined with torque imbalance force vector **29,** resulting in a vibration force vector **30,** said vibration force vector **30** being valid for the upper and lower planes of the tire/wheel assembly
FIG. 4 presents a schematic view of a balanced tire/wheel assembly **23** as mounted onto the system for tire/wheel assembly uniformity balancing **22.** The figure shows the a tire/wheel assembly **23** mounted onto the second axis **25** of the system **22.** The figure shows drum **31** rotatably attached to the first axis **24,** which axis is movable relative to the second axis **25** by means spindle/load drive motor transmission **32, 33** permit adjusting the load applied to the tire/wheel assembly **23** by drum **31.** The figure shows a vector representing the static force created by balancing weight **35** on the upper and lower planes of the tire/wheel assembly, the identical vector for the lower plane of the same tire/wheel assembly not being shown in the figure. Said vector **35** being shown advantageously having identical magnitude and being 180° out of phase relative to the vector representing the vibration force **30** of the tire/wheel assembly **23.** Said vector representing the vibration force **30** being valid for the upper and lower plane of the tire/wheel assembly **23** before the placement of balancing weight **34.**

The present invention is in no way limited to the embodiments described in the examples and/or shown in the figures. On the contrary, methods according to the present invention may be realized in many different ways without departing from the scope of the invention.

### List of numbered items:

- 1: tire/wheel assembly production line
- 2: wheel feeding
- 3: tire feeding
- 4: valve assembly
- 5: wheel run-out
- 6: tire/wheel assembling
- 7: point-to-point matching
- 8: inflation of the tire
- 9: tire pressure monitoring system activation
- 10: bead seat optimization
- 11: computing mass and placement of the balancing weight
- 12: application of at least one balancing weight
- 13: auditing of tire/wheel balancing
- 14: sending tire/wheel assembly to warehouse
- 15: high-speed tire/wheel assembly uniformity balancing
- 16: receiving tire/wheel assembly
- 17: mounting tire/wheel assembly on fixture
- 18: bringing drum in contact with tire/wheel assembly
- 19: bring drum load pressure upon tire/wheel assembly to predetermined value
- 20: run test drum at critical car speed.
- 21: compute mass and location of balancing weight
- 22: system for tire/wheel assembly uniformity balancing
- 23: tire/wheel assembly
- 24: first axis
- 25: second axis
- 26: first harmonic tire uniformity force
- 27: static force
- 28: static vibration force
- 29: torque force
- 30: vibration force
- 31: drum
- 32: spindle
- 33: load drive motor
- 34: balancing weight
- 35: static force created by balancing weight to compensate the vibration force

## Claims

1. A method for high-speed tire/wheel assembly uniformity balancing comprising the steps of:
receiving a pressurized tire/wheel assembly (23);
mounting the tire/wheel assembly onto a rotatable fixture of a tire uniformity testing machine (22), said fixture being configured to receive and rigidly attach to a tire/wheel assembly;
bringing a testing drum (31) in contact with the tire of the tire/wheel assembly such that a predetermined force is applied upon said tire;
running the tire uniformity testing machine, bringing the perimeter of the testing drum to a critical speed while measuring vibration forces by means of at least four 3D sensors;
computing mass and location of at least one balancing weight (34); and balancing the tire/wheel assembly by applying said at least one balancing weight;
**characterized in that**, the measured vibration forces are used to compute a vibration force vector (30) which vector is a vectorial sum of a static vibration force (28) and a torque imbalance force vector (29), the static vibration force (28) being the vectorial sum of a tire uniformity first harmonic radial force variation vector (26) and a static imbalance vector (27), the first harmonic radial force variation vector and a static imbalance vector being measured on each of at least two planes of the tire/wheel assembly, said planes being perpendicular to the axis of the tire/wheel assembly, said torque imbalance force vector corresponding to the dynamic imbalance of the tire/wheel assembly, the first harmonic radial force variation vector and a static imbalance vector measured on each plane being used to calculate said torque imbalance force vector, the position of each balancing weight is computed based on the mass of the at least one balancing weight, and the magnitude and location of the vibration force vector.

2. The method for high-speed tire and wheel assembly uniformity balancing according to previous claim 1, **characterized in that**, before the step of bringing the testing drum in contact with the tire of the tire/wheel at least one load value is calculated based a mass distribution of a car.

3. The method for high-speed tire and wheel assembly uniformity balancing according to previous claim 2, **characterized in that**, during the vibration force vector measurement the force applied to the tire by the testing drum is equal to at least one of the calculated load values.

4. The method for high-speed tire and wheel assembly uniformity balancing according to any previous claim 1 to claim 3, **characterized in that**, the step of computing mass and location of at least one balancing weight includes computation of the location and magnitude of the vibration force vector.

5. The method for high-speed tire and wheel assembly uniformity balancing according to previous claim 4, **characterized in that**, computation of the location and magnitude of the vibration force vector is carried out using vibration values measured by at least four 3D sensors.

6. The method for high-speed tire and wheel assembly uniformity balancing according to any previous claim 1 to claim 5, **characterized in that**, the computed mass of each balancing weight is approximated to the mass of a nearest available standard weight.

7. The method for high-speed tire and wheel assembly uniformity balancing according to previous claim 6, **characterized in that**, the position of the at least one balancing weight is given as an angle and distance from the wheel axis.

8. The method for high-speed tire and wheel assembly uniformity balancing according to any previous claim 1 to claim 8, **characterized in that**, the method further comprises a step of auditing the balanced tire/wheel for any residual imbalance while the tire/wheel assembly is still mounted onto the tire uniformity machine.

9. The method for high-speed tire and wheel assembly uniformity balancing according to any previous claim 1 to claim 8, **characterized in that**, the method further comprises a step of auditing the balanced tire/wheel for any residual imbalance performed on a second tire uniformity machine.

10. A system (22) for tire/wheel assembly uniformity balancing using the method according to claim 1, the system comprising:
a drum assembly comprising a first axis (24) and tire/wheel fixture assembly comprising a second axis (25) parallel the first axis, said drum assembly being driven by a motor (33), said motor, the first axis being supported by a first frame, said first frame and the second axis being supported by a second frame, the first frame being slidably attached to the second frame and movable by means of at least one actuator;
at least four 3D sensors suitable for capturing force variations;
a brake comprising a disk rigidly attached to the first axis and brake caliper rigidly attached to the first frame, said caliper being mounted around the perimeter of the disk, and
a calculation unit configured to receive signals from each of the sensors, said calculation unit comprising at least one processing unit in connection with at least a memory unit, at least one user input device, at least one display device and at least one signal output element, at least one of the processing units of the calculation unit are configured to run the steps of:
bringing a testing drum (31) in contact with the tire of the tire/wheel assembly (23) such that a predetermined force is applied upon said tire;
running the tire uniformity testing machine, bringing the perimeter of the testing drum to a critical speed while measuring vibration forces on at least two planes of a tire/wheel assembly by means of at least two sensors;
computing mass and location of at least one balancing weight (34) by first computing the location and magnitude of a vibration force vector.

11. The system for tire/wheel assembly uniformity balancing according to previous claim 10, **characterized in that**, at least one of the at least four 3D sensors are rigidly attached to the second axis.

## Patentansprüche

1. Verfahren zum Auswuchten des Gleichlaufs einer Hochgeschwindigkeitsreifen-/-rad-Anordnung, folgende Schritte umfassend:
Aufnehmen einer aufgepumpten Reifen-/Radanordnung (23);
Montieren der Reifen-/Radanordnung auf eine drehbare Aufspannvorrichtung einer Reifengleichlaufprüfmaschine (22) wobei die Aufspannvorrichtung dafür gestaltet ist, eine Reifen-/Radanordnung aufzunehmen und starr an dieser angebracht zu werden;
In-Kontakt-Bringen einer Prüftrommel (31) mit dem Reifen der Reifen /Radanordnung derart, dass auf den Reifen eine festgelegte Kraft ausgeübt wird,
Betreiben der Reifengleichlaufprüfmaschine, Bringen des Außenumfangs der Prüftrommel auf eine kritische Geschwindigkeit, während Vibrationskräfte mittels mindestens vier 3D-Sensoren gemessen werden,
Berechnen von Masse und Position mindestens eines Auswuchtungsgewichts (34) ; und Auswuchten der Reifen-/Radanordnung durch Anlegen des mindestens einen Auswuchtungsgewichts;
**dadurch gekennzeichnet, dass** die gemessenen Vibrationskräfte verwendet werden, um einen Vibrationskraftvektor (30) zu berechnen, wobei der Vektor eine vektorielle Summe einer statischen Vibrationskraft (28) und eines Drehmoment-Unwuchtkraftvektors (29) ist, wobei die statische Vibrationskraft (28) die Vektorsumme eines ersten Vektors (26) der harmonischen Variation der Radialkraft des Reifengleichlaufs und eines Vektors (27) statischer Unwucht ist, wobei der erste Vektor der harmonischen Variation der Radialkraft und ein Vektor statischer Unwucht an jeder von mindestens zwei Ebenen der Reifen-/Radanordnung gemessen wird, wobei die Ebenen senkrecht zu der Achse der Reifen-/Radanordnung liegen, wobei der Drehmoment-Unwuchtkraftvektor der dynamischen Unwucht der Reifen-/Radanordnung entspricht, wobei der erste Vektor der harmonischen Variation der Radialkraft und ein Vektor statischer Unwucht, die an jeder Ebene gemessen werden, verwendet werden, um den Drehmoment-Unwuchtkraftvektor zu berechnen, die Position jedes Auswuchtungsgewichts basierend auf der Masse des mindestens einen Auswuchtungsgewichts und der Magnitude und Position des Vibrationskraftvektors berechnet wird.

2. Verfahren zum Auswuchten des Gleichlaufs einer Hochgeschwindigkeitsreifen-/-rad-Anordnung nach dem vorhergehenden Anspruch 1, **dadurch gekennzeichnet, dass** vor dem Schritt de In-Kontakt-Bringens der Prüftrommel mit dem Reifen der Reifen-/Radanordnung mindestens ein Lastwert basierend auf einer Masseverteilung eines Autos berechnet wird.

3. Verfahren zum Auswuchten des Gleichlaufs einer Hochgeschwindigkeitsreifen-/-rad-Anordnung nach dem vorhergehenden Anspruch 2, **dadurch gekennzeichnet, dass** während der Messung des Vibrationskraftvektors die Kraft, die durch die Prüftrommel auf den Reifen ausgeübt wird, gleich mindestens einem der berechneten Lastwerte ist.

4. Verfahren zum Auswuchten des Gleichlaufs einer Hochgeschwindigkeitsreifen-/-rad-Anordnung nach einem der vorhergehenden Ansprüche 1 bis 3, **dadurch gekennzeichnet, dass** der Schritt des Berechnens der Masse und Position mindestens eines Auswuchtungsgewichts das Berechnen der Position und Magnitude des Vibrationskraftvektors beinhaltet.

5. Verfahren zum Auswuchten des Gleichlaufs einer Hochgeschwindigkeitsreifen-/-rad-Anordnung nach dem vorhergehenden Anspruch 4, **dadurch gekennzeichnet, dass** das Berechnen der Position und Magnitude des Vibrationskraftvektors mit Hilfe von Vibrationswerten ausgeführt wird, die durch mindestens vier 3D-Sensoren gemessen werden.

6. Verfahren zum Auswuchten des Gleichlaufs einer Hochgeschwindigkeitsreifen-/-rad-Anordnung nach einem der vorhergehenden Ansprüche 1 bis 5, **dadurch gekennzeichnet, dass** die berechnete Masse jedes Auswuchtungsgewichts der Masse eines nächst verfügbaren Normgewichts angenähert wird.

7. Verfahren zum Auswuchten des Gleichlaufs einer Hochgeschwindigkeitsreifen-/-rad-Anordnung nach dem vorhergehenden Anspruch 6, **dadurch gekennzeichnet, dass** die Position des mindestens einen Auswuchtungsgewichts als ein Winkel und ein Abstand zu der Radachse gegeben ist.

8. Verfahren zum Auswuchten des Gleichlaufs einer Hochgeschwindigkeitsreifen-/-rad-Anordnung nach einem der vorhergehenden Ansprüche 1 bis 8, **dadurch gekennzeichnet, dass** das Verfahren ferner einen Schritt der Revision des ausgewuchteten Reifens/Rades auf eine restliche Unwucht, während die Reifen-/Radanordnung noch auf die Reifengleichlaufmaschine montiert ist, umfasst.

9. Verfahren zum Auswuchten des Gleichlaufs einer Hochgeschwindigkeitsreifen-/-rad-Anordnung nach einem der vorhergehenden Ansprüche 1 bis 8, **dadurch gekennzeichnet, dass** das Verfahren ferner einen Schritt der Revision des ausgewuchteten Reifens/Rades auf eine restliche Unwucht, ausgeführt auf einer zweiten Reifengleichlaufmaschine, umfasst.

10. System (22) zum Auswuchten des Gleichlaufs einer Reifen-/Radanordnung mit Hilfe des Verfahrens nach Anspruch 1, wobei das System Folgendes umfasst:
eine Trommelanordnung, die eine erste Achse (24) und eine Reifen-/Radaufspannvorrichtungsanordnung umfasst, die eine zweite Achse (25) parallel zur ersten Achse umfasst, wobei die Trommelanordnung von einem Motor (33) betrieben wird,
den Motor, wobei die erste Achse von einem ersten Gestell getragen wird, wobei das erste Gestell und die zweite Achse von einem zweiten Gestell getragen werden, wobei das erste Gestell gleitfähig an dem zweiten Gestell angebracht und mittels mindestens eines Aktors beweglich ist,
mindestens vier 3D-Sensoren, die zum Erfassen von Kraftvariationen geeignet sind,
eine Bremse, die eine Scheibe, die starr an der ersten Achse angebracht ist, und einen Bremssattel, der starr an dem ersten Gestell angebracht ist, umfasst, wobei der Sattel rings um den Außenumfang der Scheibe montiert ist, und
eine Kalkulationseinheit, die dafür gestaltet ist, Signale von jedem der Sensoren zu empfangen, wobei die Kalkulationseinheit mindestens eine Verarbeitungseinheit in Verbindung mit mindestens einer Speichereinheit, mindestens eine Benutzereingabevorrichtung, mindestens eine Anzeigevorrichtung und mindestens ein Signalausgabeelement umfasst, wobei mindestens eine der Verarbeitungseinheiten der Kalkulationseinheit dafür gestaltet ist, die folgenden Schritte abzuarbeiten:
In-Kontakt-Bringen einer Prüftrommel (31) mit dem Reifen der Reifen-/Radanordnung (23) derart, dass eine festgelegte Kraft auf den Reifen ausgeübt wird,
Betreiben der Reifengleichlaufprüfmaschine, Bringen des Außenumfangs der Prüftrommel auf eine kritische Geschwindigkeit, während Vibrationskräfte mittels mindestens zweier Sensoren an mindestens zwei Ebenen gemessen werden,
Berechnen von Masse und Position mindestens eines Auswuchtungsgewichts (34) durch erstes Berechnen der Position und Magnitude eines Vibrationskraftvektors.

11. System zum Auswuchten des Gleichlaufs einer Reifen-/Radanordnung nach Anspruch 10, **dadurch gekennzeichnet, dass** mindestens einer der mindestens vier 3D-Sensoren starr an der zweiten Achse angebracht ist.

## Revendications

1. Procédé d'équilibrage d'uniformité d'ensemble pneu/roue à grande vitesse comprenant les étapes de :
réception d'un ensemble pneu/roue (23) sous pression ;
montage de l'ensemble pneu/roue sur une fixation rotative d'une machine (22) de test d'uniformité de pneu, ladite fixation étant configurée pour recevoir et se fixer rigidement à un ensemble pneu/roue ;
fait d'amener un tambour de test (31) en contact avec le pneu de l'ensemble pneu/roue de telle manière qu'une force prédéterminée soit appliquée sur ledit pneu ;
exécution de la machine de test d'uniformité de pneu, en amenant le périmètre du tambour de test à une vitesse critique tout en mesurant les forces de vibration au moyen d'au moins quatre capteurs 3D ;
calcul de la masse et de l'emplacement d'au moins un poids d'équilibrage (34) ; et équilibrage de l'ensemble pneu/roue par application dudit au moins un poids d'équilibrage ;
**caractérisé en ce que**, les forces de vibration mesurées sont utilisées pour calculer un vecteur (30) de force de vibration, lequel vecteur est une somme vectorielle d'une force de vibration statique (28) et d'un vecteur (29) de force de déséquilibre de couple, la force de vibration statique (28) étant la somme vectorielle d'un vecteur (26) de variation de force radiale de première harmonique d'uniformité de pneu et d'un vecteur (27) de déséquilibre statique, le vecteur de variation de force radiale de première harmonique et un vecteur de déséquilibre statique étant mesurés sur chacun d'au moins deux plans de l'ensemble pneu/roue, lesdits plans étant perpendiculaires à l'axe de l'ensemble pneu/roue, ledit vecteur de force de déséquilibre de couple correspondant au déséquilibre dynamique de l'ensemble pneu/roue, le vecteur de variation de force radiale de première harmonique et un vecteur de déséquilibre statique mesurés sur chaque plan étant utilisés pour calculer ledit vecteur de force de déséquilibre de couple, la position de chaque poids d'équilibrage est calculée sur la base de la masse de l'au moins un poids d'équilibrage, et de la grandeur et de l'emplacement du vecteur de force de vibration.

2. Procédé d'équilibrage d'uniformité d'ensemble de pneu et de roue à grande vitesse selon la revendication 1 précédente, **caractérisé en ce que**, avant l'étape consistant à amener le tambour de test en contact avec le pneu du pneu/roue, au moins une valeur de charge est calculée sur la base d'une distribution de masse d'une voiture.

3. Procédé d'équilibrage d'uniformité d'ensemble de pneu et de roue à grande vitesse selon la revendication 2 précédente, **caractérisé en ce que**, pendant la mesure du vecteur de force de vibration, la force appliquée sur le pneu par le tambour de test est égale à au moins l'une des valeurs de charge calculées.

4. Procédé d'équilibrage d'uniformité d'ensemble de pneu et de roue à grande vitesse selon une quelconque revendication 1 à revendication 3 précédente, **caractérisé en ce que**, l'étape de calcul de la masse et de l'emplacement d'au moins un poids d'équilibrage inclut le calcul de l'emplacement et de la grandeur du vecteur de force de vibration.

5. Procédé d'équilibrage d'uniformité d'ensemble de pneu et de roue à grande vitesse selon la revendication 4 précédente, **caractérisé en ce que**, le calcul de l'emplacement et de la grandeur du vecteur de force de vibration est réalisé en utilisant des valeurs de vibration mesurées par au moins quatre capteurs 3D.

6. Procédé d'équilibrage d'uniformité d'ensemble de pneu et de roue à grande vitesse selon une quelconque revendication 1 à revendication 5 précédente, **caractérisé en ce que**, la masse calculée de chaque poids d'équilibrage est arrondie à la masse d'un poids standard disponible le plus proche.

7. Procédé d'équilibrage d'uniformité d'ensemble de pneu et de roue à grande vitesse selon la revendication 6 précédente, **caractérisé en ce que**, la position de l'au moins un poids d'équilibrage est donnée comme étant un angle et une distance par rapport à l'axe de roue.

8. Procédé d'équilibrage d'uniformité d'ensemble de pneu et de roue à grande vitesse selon une quelconque revendication 1 à revendication 8 précédente, **caractérisé en ce que**, le procédé comprend en outre une étape de vérification du pneu/roue équilibré pour déceler tout déséquilibre résiduel tandis que l'ensemble pneu/roue est toujours monté sur la machine d'uniformité de pneu.

9. Procédé d'équilibrage d'uniformité d'ensemble de pneu et de roue à grande vitesse selon une quelconque revendication 1 à revendication 8 précédente, **caractérisé en ce que**, le procédé comprend en outre une étape de vérification du pneu/roue équilibré pour déceler tout déséquilibre résiduel, effectuée sur une seconde machine d'uniformité de pneu.

10. Système (22) d'équilibrage d'uniformité d'ensemble pneu/roue en utilisant le procédé selon la revendication 1, le système comprenant :
un ensemble tambour comprenant un premier axe (24) et un ensemble de fixation de pneu/roue comprenant un second axe (25) parallèle au premier axe, ledit ensemble tambour étant entraîné par un moteur (33), ledit moteur, le premier axe étant supporté par un premier cadre, ledit premier cadre et le second axe étant supportés par un second cadre, le premier cadre étant fixé de manière coulissante au second cadre et mobile au moyen d'au moins un actionneur ;
au moins quatre capteurs 3D appropriés pour capturer des variations de force ;
un frein comprenant un disque fixé de manière rigide au premier axe et un étrier de frein fixé de manière rigide au premier cadre, ledit étrier étant monté autour du périmètre du disque, et
une unité de calcul configurée pour recevoir des signaux en provenance de chacun des capteurs, ladite unité de calcul comprenant au moins une unité de traitement en connexion avec au moins une unité de mémoire, au moins un dispositif d'entrée d'utilisateur, au moins un dispositif d'affichage et au moins un élément de sortie de signal, au moins l'une des unités de traitement de l'unité de calcul est configurée pour exécuter les étapes de :
fait d'amener un tambour de test (31) en contact avec le pneu de l'ensemble pneu/roue (23) de telle manière qu'une force prédéterminée soit appliquée sur ledit pneu ;
exécution de la machine de test d'uniformité de pneu, en amenant le périmètre du tambour de test à une vitesse critique tout en mesurant des forces de vibration sur au moins deux plans d'un ensemble pneu/roue au moyen d'au moins deux capteurs ;
calcul de la masse et de l'emplacement d'au moins un poids d'équilibrage (34) en calculant tout d'abord l'emplacement et la grandeur d'un vecteur de force de vibration.

11. Système d'équilibrage d'uniformité d'ensemble pneu/roue selon la revendication 10 précédente, **caractérisé en ce que**, au moins l'un des au moins quatre capteurs 3D est fixé de manière rigide au second axe.
